# EUROPEAN PATENT SPECIFICATION

(11) **EP 3 472 495 B1**
(45) Date of publication and mention of the grant of the patent: **21.04.2021**
(21) Application number: 17751456.9
(22) Date of filing: 15.06.2017
(51) Int. Cl.: F16H 57/08, F16H 57/04

(54) **GEARMOTOR**
GETRIEBEMOTOR
MOTEUR À ENGRENAGES

(30) Priority: 15.06.2016 IT UA20164391
(43) Date of publication of application: 24.04.2019
(73) Proprietor: Bonfiglioli S.p.A., 40012 Calderara di Reno (BO) (IT)
(72) Inventor: CASAMENTI, Gustavo, 40012 CALDERARA DI RENO (IT); MACCAFERRI, Cristiano, 40012 Calderara di Reno (IT); ZUCCHINI, Matteo, 40012 Calderara di Reno (IT)
(74) Representative: Manconi, Stefano
(86) International application number: PCT/IB2017/053564
(87) International publication number: WO 2017/216754

(56) References cited:
- WO-A1-2009/037174
- CN-U- 202 301 881
- DE-U1-202006 014 140

## Description

### TECHNICAL FIELD

The present invention relates to a gearmotor according to the preamble of claim 1 and as it is disclosed in WO2009037174A.

### BACKGROUND ART

In particular, the present invention relates to a gearmotor of the type comprising an epicyclic reduction gear having an input shaft and an output shaft; an electric operating motor for the epicyclic reduction gear; and a cooling device mounted between the electric motor and the epicyclic reduction gear so as to cool the epicyclic reduction gear itself.

The cooling device comprises a tubular casing mounted at a given axial distance from a containing casing of the electric motor; and an impeller mounted inside of the tubular casing to rotate about a rotation axis coincident with the rotation axis of the output shaft of the electric motor.

Generally, the impeller is fitted on a transmission shaft connected on one side to the input shaft of the epicyclic reduction gear and on the other side to the output shaft of the electric motor by means of the interposition of a coupling joint.

Due to the connection between the output shaft of the electric motor, the transmission shaft of the cooling device and the input shaft of the epicyclic reduction gear and due to the axial distance between the containing casing of the electric motor and the tubular casing of the cooling device, the known gearmotors of the above described type have relatively bulky axial dimensions, a relatively large number of components, involve a relatively complex mounting and assembly operation and are therefore relatively expensive.

### DISCLOSURE OF INVENTION

The object of the present invention is to provide a gearmotor that is free from the above described drawbacks and is simple and inexpensive to implement.

According to the present invention a gearmotor is provided as claimed in the appended claims.

### BRIEF DESCRIPTION OF THE DRAWINGS

The present invention will now be described with reference to the accompanying drawings, which illustrate a non-limiting example of embodiment, wherein:
Figure 1 is a perspective exploded view of a preferred embodiment of the gearmotor of the present invention; and
Figure 2 is a schematic longitudinal section of the gearmotor of Figure 1.

### BEST MODE FOR CARRYING OUT THE INVENTION

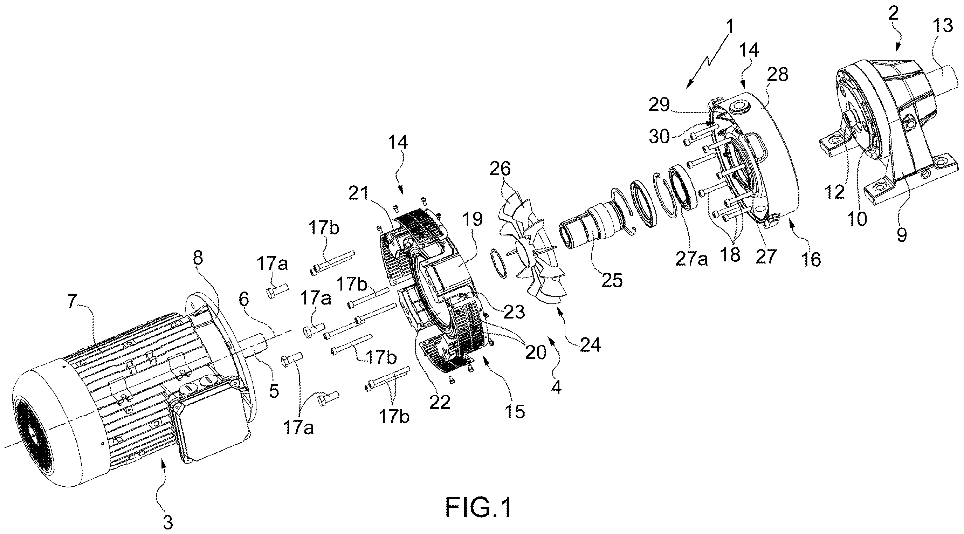

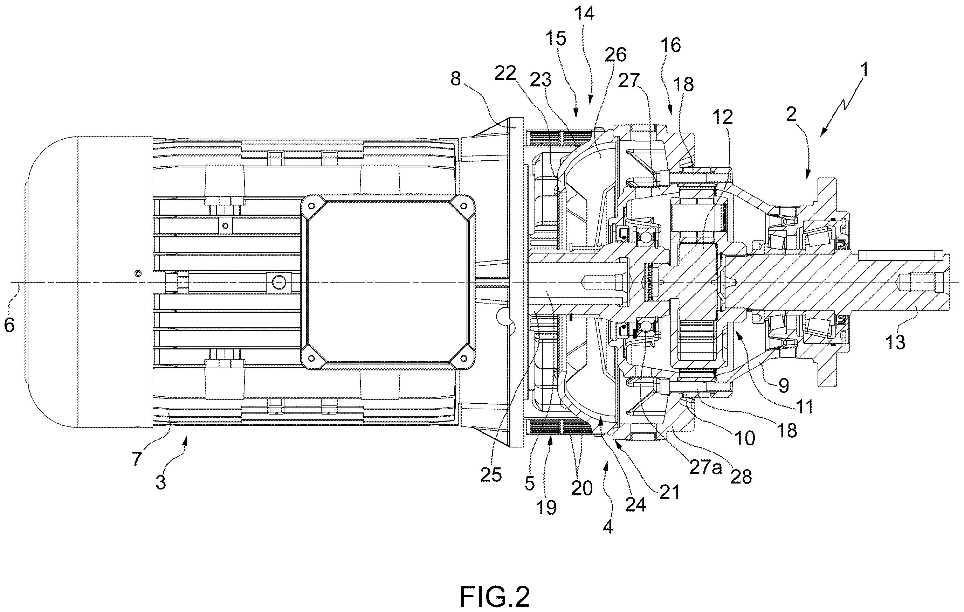

With reference to Figures 1 and 2, 1 denotes, as a whole, a gearmotor comprising an epicyclic reduction gear 2, an operating electric motor 3 for the epicyclic reduction gear 2 and a cooling device 4 for the epicyclic reduction gear 2 itself.

The electric motor 3 has an output shaft 5, which is mounted so as to rotate around a rotation axis 6, and protrudes outwards from a containing casing 7, which has a tubular shape, and is provided with an end flange 8 substantially flat and perpendicular to axis 6 itself.

The epicyclic reduction gear 2 comprises a containing casing 9 which has a tubular shape and is provided with an end flange 10 substantially flat and perpendicular to the axis 6.

The casing 9 houses on its inside, in this case, a reduction stage 11 of a known type, extending between an input shaft 12 and an output shaft 13, which are coaxial to the axis 6 and are mounted so as to rotate with respect to the casing 9 around the axis 6 itself.

The cooling device 4 is mounted between the epicyclic reduction gear 2 and the electric motor 3 and comprises a containing casing 14, which has a tubular shape and comprises, in turn, two tubular bodies 15, 16 mounted one after the other along the axis 6.

The body 15 is fixed to the flange 8 of the casing 7 of the electric motor 3 by means of a plurality of fastening screws 17a parallel to the axis 6 and is further fixed to the body 16 by means of a plurality of fastening screws 17b parallel to the axis 6.

The body 16 is fixed to the flange 10 of the casing 9 of the epicyclic reduction gear 2 by means of a plurality of fastening screws 18 parallel to the axis 6.

The body 15 comprises an outer sleeve 19, which has a substantially cylindrical shape, is coaxial to the axis 6, and is axially fixed to the flange 8 by means of the screws 17.

The sleeve 19 is provided with a plurality of openings 20, which extend parallel to the axis 6 and are uniformly distributed around the axis 6.

The body 15 further comprises, an inner cup-shaped body 21, which extends on the inside of the sleeve 19, is delimited by an annular bottom wall 22 coaxial to the axis 6, and is delimited, furthermore, by a shaped side wall 23 radially facing the openings 20.

The wall 23 is engaged in a rotary manner by a rotating impeller 24 fitted on a coupling bushing 25, which extends through the casing 14 so as to connect the output shaft 5 of the electric motor 3 and the input shaft 12 of the epicyclic reduction gear 2 to one another, in an angularly fixed manner.

The impeller 24 is provided with a plurality of blades 26 which have a shaped outline complementary to the shape of the wall 23 and are uniformly distributed around the axis 6. The shape of the blades 26 allows the impeller 24 to cool the epicyclic reduction gear 2 both when the shaft 5 rotates clockwise and when the shaft 5 rotates counterclockwise.

The tubular body 16 comprises an inner sleeve 27 engaged in a rotary manner by the bushing 25 by means of the interposition of a rolling bearing 27a, and an outer sleeve 28 connected to the inner sleeve 27 by means of a plurality of radial walls 29 uniformly distributed around the axis 6.

The walls 29 define, between one another, a plurality of outlet channels 30, each of which has a longitudinal axis substantially parallel to the axis 6.

From the above it is apparent that the casing 14 of the device 4 allows the air to enter inside the casing 14 with a substantially radial inlet movement through the openings 20 and to exit the casing 14 with a substantially axial outlet movement through the channels 30.

Moreover, the body 16 is stiffened by the walls 29 and is therefore capable of supporting the weight of the assembly defined by the electric motor 3 and by the cooling device 4.

The configuration and arrangement of the cooling device 4 have some advantages mainly deriving from the fact that the gearmotor 1 is relatively compact and has a relatively small axial dimension and in that the casing 14 is designed to support the electric motor 3.

Moreover, since the body 21 extends inside the sleeve 19, the openings 20 have a relatively long axial length, allowing a relatively high amount of air to enter the tubular body 15 and to confer a relatively high efficiency to the cooling device 4.

Finally, the efficiency of the cooling device 4 allows to increase the power of the electric motor 3 that the epicyclic reduction gear 2 is capable of transmitting at the same maximum temperature of the motor gear 1.

## Claims

1. A gearmotor comprising an epicyclic reduction gear (2) provided with a first containing casing (9) having a first coupling flange (10); an operating motor (3) provided with a second containing casing (7) having a second coupling flange (8); and a cooling device (4) which is mounted between the operating motor (3) and the epicyclic reduction gear (2) so as to cool the epicyclic reduction gear (2), and comprises, in turn, a third containing casing (14) placed in contact with, and directly fixed to, said first and second coupling flanges (10, 8) and an impeller (24), which is mounted so as to rotate inside the third containing casing (14); the operating motor (3) and the epicyclic reduction gear (2) having an output shaft (5) and an input shaft (12), respectively, which are coaxial to one another, and are mounted so as to rotate around a rotation axis (6); and **characterized in that** the third containing casing (14) comprises a first tubular body (15) and a second tubular body (16) arranged one after the other along said rotation axis (6), and **in that** the second tubular body (16) comprises an inner sleeve (27) fixed to the first coupling flange (10), and an outer sleeve (28) connected to the inner sleeve (27) by means of a plurality of walls (29), which are distributed around said rotation axis (6), and define a plurality of outlet channels (30), each of which has a longitudinal axis substantially parallel to the rotation axis (6) itself.

2. The gearmotor according to claim 1 and comprising, furthermore, first fastening screws (18) to connect said first and third containing casing (9, 14) to one another and second fastening screws (17a) to connect said second and third containing casings (7, 14) to one another.

3. The gearmotor according to claim 1 or 2, wherein the third containing casing (14) has a plurality of openings (20), which are designed to allow air to enter the third containing casing (14) with a substantially radial inlet movement, and is designed to transform the radial inlet movement into an outlet movement that is substantially axial along the epicyclic reduction gear (2).

4. The gearmotor according to any one of the preceding claims, wherein said input and output shafts (12, 5) are coupled to one another in an angularly fixed manner by means of a coupling bushing (25), which is coaxial to said rotation axis (6).

5. The gearmotor according to claim 4, wherein the impeller (24) is fitted on the coupling bushing (25).

6. The gearmotor according to any one of the preceding claims, wherein the first tubular body (15) comprises an outer sleeve (19), which has a substantially cylindrical shape, and is provided with a plurality of openings (20) allowing air to enter into the third containing casing (14), and an inner cup-shaped body (21), which extends on the inside of the sleeve (19), is delimited by an annular bottom wall (22), and is further delimited by a lateral wall (23), which is engaged by the impeller (24) in a rotary manner.

7. The gearmotor as claimed in claim 6, wherein the openings (20) extend parallel to said rotation axis (6) and at least partly radially face said cup-shaped body (21).

8. The gearmotor according to claim 6 or 7, wherein the impeller (24) is provided with a plurality of blades (26) having a shape that is complementary to the shape of the side wall (23) of the cup-shaped body (21).

9. The gearmotor according to any one of the preceding claims and comprising, furthermore, third fastening screws (17b) to connect said first and second tubular bodies (15, 16) to one another.

## Patentansprüche

1. Getriebemotor, der ein epizyklisches Untersetzungsgetriebe (2) aufweist, welches mit einem ersten umschließenden Gehäuse (9) mit einem ersten Kupplungsflansch (10) versehen ist; weiter einen Antriebsmotor (3), der mit einem zweiten umschließenden Gehäuse (7) mit einem zweiten Kupplungsflansch (8) versehen ist; und eine Kühlvorrichtung (4), die zwischen dem Antriebsmotor (3) und dem epizyklischen Untersetzungsgetriebe (2) montiert ist, so dass sie das epizyklische Untersetzungsgetriebe (2) kühlt, und welche wiederum ein drittes umschließendes Gehäuse (14) aufweist, welches in Kontakt mit und direkt befestigt an den ersten und zweiten Kupplungsflanschen (10, 8) angeordnet ist, und ein Laufrad (24), welches so montiert ist, dass es sich innerhalb des dritten umschließenden Gehäuses (14) dreht; wobei der Antriebsmotor (3) und das epizyklische Untersetzungsgetriebe (2) eine entsprechende Ausgangswelle (5) und eine Eingangswelle (12) haben, die koaxial zueinander sind und so montiert sind, dass sie sich um eine Drehachse (6) drehen; und **dadurch gekennzeichnet, dass** das dritte umschließende Gehäuse (14) einen ersten rohrförmigen Körper (15) und einen zweiten rohrförmigen Körper (16) aufweist, die nacheinander entlang der Drehachse (6) angeordnet sind, und dadurch, dass der zweite rohrförmige Körper (16) eine innere Hülse (27) aufweist, die an dem ersten Kupplungsflansch (10) befestigt ist, und eine äußere Hülse (28), die mit der inneren Hülse (27) mittels einer Vielzahl von Wänden (29) verbunden ist, die um die Drehachse (6) herum verteilt sind, und die eine Vielzahl von Auslasskanälen (30) definieren, wobei jeder davon eine Längsachse hat, die im Wesentlichen parallel zu der Drehachse (6) selbst ist.

2. Getriebemotor nach Anspruch 1, der weiter erste Befestigungsschrauben (18) aufweist, um die ersten und dritten umschließenden Gehäuse (9, 14) miteinander zu verbinden, und zweite Befestigungsschrauben (17a) zur Verbindung der zweiten und dritten umschließenden Gehäuse (7, 14) miteinander.

3. Getriebemotor nach Anspruch 1 oder 2, wobei das dritte umschließende Gehäuse (14) eine Vielzahl von Öffnungen (20) hat, die ausgelegt sind, um zu gestatten, dass Luft in das dritte umschließende Gehäuse (14) mit einer im Wesentlichen radialen Einlassbewegung eintritt, und wobei es ausgelegt ist, um die radiale Einlassbewegung in eine Auslassbewegung umzuwandeln, die im Wesentlichen axial entlang des epizyklischen Untersetzungsgetriebes (2) ist.

4. Getriebemotor nach einem der vorhergehenden Ansprüche, wobei die Eingangs- und Ausgangswellen (12, 5) miteinander in einer in Winkelrichtung festgelegten Weise mittels eine Kupplungsbuchse (25) gekoppelt sind, die koaxial zur Drehachse (6) ist.

5. Getriebemotor nach Anspruch 4, wobei das Laufrad (24) auf die Kupplungsbuchse (25) gepasst ist.

6. Getriebemotor nach einem der vorhergehenden Ansprüche, wobei der erste rohrförmige Körper (15) eine äußere Hülse (19) aufweist, die eine im Wesentlichen zylindrische Form hat, und mit einer Vielzahl von Öffnungen (20) versehen ist, die gestatten, dass Luft in das dritte umschließende Gehäuse (14) eintritt, und einen inneren napfförmigen Körper (21), der sich an der Innenseite der Hülse (19) erstreckt, der durch eine ringförmige untere Wand (22) begrenzt ist und weiter durch eine seitliche Wand (23) begrenzt ist, die in drehbarer Weise mit dem Laufrad (24) in Eingriff ist.

7. Getriebemotor nach Anspruch 6, wobei die Öffnungen (20) sich parallel zu der Drehachse (6) erstrecken und zumindest teilweise radial zu dem napfförmigen Körper (21) weisen.

8. Getriebemotor nach Anspruch 6 oder 7, wobei das Laufrad (24) mit einer Vielzahl von Schaufeln (26) versehen ist, die eine Form haben, die komplementär zu der Form der Seitenwand (23) des napfförmigen Körpers (21) ist.

9. Getriebemotor nach einem der vorhergehenden Ansprüche, der weiter dritte Befestigungsschrauben (17b) zur Verbindung der ersten und zweiten rohrförmigen Körper (15, 16) miteinander aufweist.

## Revendications

1. Motoréducteur comprenant un engrenage réducteur épicycloïdal (2) muni d'un premier carter contenant (9) ayant une première bride de couplage (10) ; un moteur d'actionnement (3) muni d'un deuxième carter contenant (7) ayant une deuxième bride de couplage (8) ; et un dispositif de refroidissement (4) qui est monté entre le moteur d'actionnement (3) et l'engrenage réducteur épicycloïdal (2) de façon à refroidir l'engrenage réducteur épicycloïdal (2), et comprend, à son tour, un troisième carter contenant (14) placé en contact avec lesdites première et deuxième brides de couplage (10, 8) et fixé directement à celles-ci et une turbine (24), qui est montée de façon à tourner à l'intérieur du troisième carter contenant (14) ; le moteur d'actionnement (3) et l'engrenage réducteur épicycloïdal (2) ayant un arbre de sortie (5) et un arbre d'entrée (12), respectivement, qui sont coaxiaux l'un à l'autre, et sont montés de façon à tourner autour d'un axe de rotation (6) ; et **caractérisé en ce que** le troisième carter contenant (14) comprend un premier corps tubulaire (15) et un deuxième corps tubulaire (16) agencés l'un après l'autre le long dudit axe de rotation (6), et **en ce que** le deuxième corps tubulaire (16) comprend un manchon interne (27) fixé à la première bride de couplage (10), et un manchon externe (28) raccordé au manchon interne (27) au moyen d'une pluralité de parois (29), qui sont réparties autour dudit axe de rotation (6), et définissent une pluralité de canaux de sortie (30), dont chacun présente un axe longitudinal sensiblement parallèle à l'axe de rotation (6) lui-même.

2. Motoréducteur selon la revendication 1 et comprenant, en outre, des premières vis de fixation (18) pour raccorder lesdits premier et troisième carters contenants (9, 14) l'un à l'autre et des deuxièmes vis de fixation (17a) pour raccorder lesdits deuxième et troisième carters contenants (7, 14) l'un à l'autre.

3. Motoréducteur selon la revendication 1 ou 2, dans lequel le troisième carter contenant (14) possède une pluralité d'ouvertures (20), qui sont conçues pour permettre à l'air d'entrer dans le troisième carter contenant (14) avec un déplacement d'entrée sensiblement radial, et sont conçues pour transformer le déplacement d'entrée radial en un déplacement de sortie qui est sensiblement axial le long de l'engrenage réducteur épicycloïdal (2).

4. Motoréducteur selon l'une quelconque des revendications précédentes, dans lequel lesdits arbres d'entrée et de sortie (12, 5) sont couplés l'un à l'autre de manière angulairement fixe au moyen d'une douille de couplage (25), qui est coaxiale audit axe de rotation (6).

5. Motoréducteur selon la revendication 4, dans lequel la turbine (24) est adaptée sur la douille de couplage (25).

6. Motoréducteur selon l'une quelconque des revendications précédentes, dans lequel le premier corps tubulaire (15) comprend un manchon externe (19), qui a une forme sensiblement cylindrique, et est muni d'une pluralité d'ouvertures (20) permettant à l'air d'entrer dans le troisième carter contenant (14), et un corps en forme de coupelle interne (21), qui s'étend sur l'intérieur du manchon (19), est délimité par une paroi de fond annulaire (22), et est en outre délimité par une paroi latérale (23), qui est mise en prise par la turbine (24) de manière rotative.

7. Motoréducteur selon la revendication 6, dans lequel les ouvertures (20) s'étendent parallèlement audit axe de rotation (6) et font face radialement au moins partiellement audit corps en forme de coupelle (21).

8. Motoréducteur selon la revendication 6 ou 7, dans lequel la turbine (24) est munie d'une pluralité d'aubes (26) ayant une forme qui est complémentaire à la forme de la paroi de côté (23) du corps en forme de coupelle (21).

9. Motoréducteur selon l'une quelconque des revendications précédentes et comprenant, en outre, des troisièmes vis de fixation (17b) pour raccorder lesdits premier et deuxième corps tubulaires (15, 16) l'un à l'autre.
